(19)

Europäisches
Patentamt
European
Patent Office
Office européen
des brevets

(11) **EP 2 878 623 B1**

(12) **EUROPEAN PATENT SPECIFICATION**

(45) Date of publication and mention
of the grant of the patent:
**11.07.2018 Bulletin 2018/28**

(51) Int Cl.:
***C08L 23/06*** *(2006.01)*

(21) Application number: **13194881.2**

(22) Date of filing: **28.11.2013**

(54) **Multimodal polymer**

Multimodales Polymer

Polymère multimodal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.06.2015 Bulletin 2015/23**

(73) Proprietors:
• **Abu Dhabi Polymers Company Limited (Borouge)
Abu Dhabi (AE)**
• **Borealis AG
1220 Vienna (AT)**

(72) Inventors:
• **Buryak, Andrey
4021 Linz (AT)**
• **Goris, Roger
Abu Dhabi (AE)**
• **Kumar, Ashish
Abu Dhabi (AE)**

(74) Representative: **Dehns
St. Brides House
10 Salisbury Square
London EC4Y 8JD (GB)**

(56) References cited:
**US-A1- 2008 312 380     US-A1- 2009 036 610**

**Description**

This invention concerns a multimodal polyethylene polymer which is suitable for use in moulding applications or for the manufacture of pipes, in particular blow moulding applications, as well as a process for the manufacture thereof. In particular, the invention relates to a multimodal high density polyethylene with broad molecular weight distribution which possesses an ideal balance of stiffness, ESCR, impact and processability. The invention also encompasses a process for the manufacture of a multimodal high density polyethylene in a multistage polymerisation cascade.

**Background**

The use of polyethylenes in the manufacture of moulded articles and pipes is well known. There are countless disclosures of all manner of polyethylenes for the manufacture of these valuable products. In order to be useful in the manufacture of such finished articles the polymer in question needs to possess certain properties.

It is desirable, for example, for a polymer to possess good rheological properties in order to maximise processability (i.e. decrease melt pressure and/or melt temperature) during extrusion and moulding, especially blow moulding. By increasing MFR, it is known that the melt pressure and melt temperature can be decreased, but the increased MFR has a negative effect on the melt strength, which is needed to avoid parison break during a blow moulding process.

There is therefore, an optimal balance between MFR and melt strength. Currently, polyethylene polymers produced using Cr catalysis (Cr PE) are widely used in blow moulding processes due to their balance of rheological properties compared with similar bimodal polyethylene polymers produced using Ziegler Natta catalysis (ZN PE), however the processing related properties (higher melt temperature and/or high processing pressure) are less satisfactory compared to ZN PE. It has been a challenge to develop competing polymers, in particular ZN PE solutions, which have similar or improved processability to comparable Cr PE without sacrificing other properties of the article.

Moulded articles and pipes should also possess high stiffness in order to allow manufacture of lightweight articles and hence minimise raw material usage. Articles must be capable of long term storage and hence must possess high environmental stress crack resistance (ESCR). Articles need to possess impact resistance to avoid damage when dropped or avoid damage during transport and handling. Improving one of these attributes tends however to cause a reduction in another attribute. Moreover, optimising processability can have adverse effect on the impact and ESCR properties. Current solutions tend therefore to involve a compromise in product design and/or processability behaviour.

Previous attempts to improve resin ESCR, for example, have consisted of increasing the resin comonomer content and/or decreasing melt flow rate (MFR). However, although an improved ESCR was observed using these approaches, an increase in comonomer content results in a decrease in stiffness and a decrease in MFR sacrifices the processability due to increase in viscosity.

In the context of blow moulding, meeting die swell requirements is also important. If the die swell is too low, additional features, such as handles on a container, cannot be formed. The term die swell refers to the expansion of a free form parison upon exit from a die after the molten precursor resin has been delivered under pressure to the die, by means of an extruder. To get a desirable high die swell, long chain branching (LCB) is typically introduced to the polymer. The LCB, however, increases the processing temperature and, accordingly, increases the energy consumption, i.e. production costs. Additionally LCB sacrifices the ESCR property which is important for many moulding applications.

There remains therefore the need for a multimodal high density ethylene copolymer composition that can provide advantageous processing properties without loss of mechanical properties.

**Summary of Invention**

Viewed from one aspect the invention provides a multimodal polyethylene polymer having an $MFR_2$ of 0.01 to 0.5 g/l0min, a density of at least 954 kg/m$^3$, a Mw/Mn of 12-22, an Mz/Mw of 6 to 8 and wherein

$$Mz/Mw > 10.75 - [0.25 *(Mw/Mn)] \qquad (I)$$

said polymer comprising:

    (A) a lower molecular weight ethylene homopolymer (referred herein as LMW component (A)); and
    (B) a higher molecular weight polymer component of ethylene and at least one C3-10 alpha olefin comonomer, (referred herein as HMW component (B).

Viewed from another aspect the invention provides a multimodal polymer composition which comprises or consists of the multimodal polymer of the invention.

Herein below the polyethylene composition is also referred to as "PE composition" or "PE composition of the invention". "Multimodal polyethylene polymer" means herein the multimodality of the polyethylene with respect to the weight average molecular weight (in other terms with respect to molecular weight distribution (MWD)). Herein below the multimodal polyethylene polymer is also referred to as "PE polymer" or "PE polymer of the invention".

Surprisingly, the PE polymer has good stiffness, excellent ESCR, good processability (e.g. in terms of melt strength and die swell) and good impact resistance. Said PE polymer of the polyethylene composition is multimodal with respect to the weight average molecular weight distribution as will be explained later below and has a specific high density, specific melt flow rate (MFR), specific molecular weight distribution (MWD) and, especially, a particular relationship between Mz and Mw. The polyethylene polymer of the polyethylene composition is preferably produced using a Ziegler Natta catalyst

The PE composition comprising said multimodal PE polymer of the invention has high stiffness (which enables the formation of, *inter alia,* lightweight bottles), excellent stress cracking resistance (to prevent, inter alia, article deterioration during storage), excellent processability (to reduce melt temperature and therefore production costs) as well as good impact resistance (to avoid article failure during transportation and handling).

Moreover, the combination of features in the multimodal PE polymer of the invention unexpectedly provides both advantageously high tensile modulus and surprisingly high ESCR.

Some high density polyethylenes are discussed in the literature. WO2007/024746 discloses a high density polyethylene, but a multimodal polyethylene having the specific property balance explained above and below is not disclosed in said document.

WO2011/057924 describes a Ziegler Natta produced multimodal HDPE polymer having homopolymer and copolymer components. Its $MFR_2$ is however higher than is required in the present case. Also, the example polymer does not satisfy the relationship between Mw/Mn and Mz/Mw which is required in the present invention.

WO2009/085922 describes a very wide range of polymer blends for blow moulding applications. The blends generally possess broad Mw/Mn and high density.

Also, many multimodal HDPE resins are commercially available, as shown in the examples below. None of these prior art polymers however, have the particular features of the invention, which provide the highly desirable property balance to the PE composition of the invention.

The PE polymer of the invention has a specific relationship between the Mw/Mn and Mz/Mw ratios as defined above. This molecular distribution structure results in articles, and in particular pipes and blow moulded articles, with advantageous property balance, especially in terms of stiffness, impact strength, ESCR, die swell, melt strength and processability. Accordingly, said properties of the PE polymer are all at highly desirable level for demanding moulding applications. Such property balance is difficult to achieve without sacrificing one or more other properties, as shown in the experimental part with various types of polyethylene polymers not meeting the desired relationship.

Moreover, the PE polymer of the invention provides a sufficiently high die swell without the introduction LCB to the polymer. The effect of the relationship of Mz/Mw and Mw/Mn of the invention to improve said properties cannot be predicted from the prior art.

Viewed from another aspect the invention provides a PE polymer and a PE composition comprising or consisting of the PE polymer, wherein the PE polymer as herein defined has Mw/Mn of 12 to 22, preferably 12 to 20, more preferably 14 to 20, most preferably 16 to 20.

The lower weight average molecular weight polyethylene polymer component (A), which is referred herein shortly as LMW component (A), has lower weight average molecular weight than higher weight average weight molecular weight polymer component (B), which is referred to herein shortly as HMW component (B). Both LMW and HMW components (A) and (B) are preferably obtainable by polymerisation using Ziegler Natta catalysis, ideally the same Ziegler Natta catalyst.

Viewed from another aspect the invention provides an article, such as a pipe or moulded article, preferably a blow moulded article, comprising a PE composition as herein before defined.

Viewed from another aspect the invention provides the use of the PE polymer as hereinbefore defined in the manufacture of an article such as a moulded article or pipe, preferably blow mouled article.

Viewed from another aspect the invention provides a process for the preparation of a multimodal polyethylene polymer as herein before defined comprising;

polymerising ethylene so as to form a LMW component (A); and subsequently

polymerising ethylene and at least one C3-10 alpha olefin comonomer in the presence of component (A) so as to form a HMW component (B);

so as to obtain a multimodal polyethylene polymer having an $MFR_2$ of 0.01 to 0.5 g/lOmin, a density of 954 kg/m$^3$ or more, a Mw/Mn of 12-22, an Mz/Mw of 6 to 8 and wherein

$$Mz/Mw > 10.75 - [0.25 *(Mw/Mn)].$$

Viewed from another aspect the invention provides a process for the preparation of a PE composition as herein before defined comprising;
polymerising ethylene so as to form a LMW component (A); and subsequently
polymerising ethylene and at least one C3-10 alpha olefin comonomer in the presence of component (A) so as to form a HMW component (B);
so as to obtain a multimodal polyethylene polymer having an $MFR_2$ of 0.01 to 0.5 g/lOmin, a density of 954 kg/m$^3$ or more, a Mw/Mn of 12-22, an Mz/Mw of 6 to 8 and wherein

$$Mz/Mw > 10.75 - [0.25 *(Mw/Mn)];$$

and
optionally combining said PE polymer with a further component, e.g. an additive.

The inventive process also encompasses recovering the obtained polymer, e.g. from the reactor in which it is finally produced. The invention may also encompass pelletizing the polymer in an extruder to form a PE polymer or PE composition in pellet form.

The invention further comprises moulding the PE polymer or PE composition of said process to form an article such as moulded article, which is preferably a blow moulded article, or extruding the PE polymer or PE composition to form a pipe.

## Definitions

The term Mz refers to the Z average molecular weight of the PE polymer. The Mz, like other molecular weight parameters (Mw and Mn), is measured by establishing thermodynamic equilibrium where molecules distribute according to molecular size. Mz is more sensitive than the other averages to the largest molecules present in the sample and hence the values we report in the present invention represent polymers with a more pronounced high molecular weight tail.

Mw refers to weight average molecular weight.

## Detailed Description of Invention

It has been found that the PE composition according to the invention provides an improved material for pipes or moulding applications, in particular for moulding applications, preferably blow moulding applications, and especially for the manufacture of containers such as bottles. The PE polymer of the invention combines very good mechanical properties e.g. in terms of stress crack resistance, stiffness and impact strength with excellent processability. Additionally, the die swell and melt strength of the PE polymer is sufficiently high for demanding moulding applications.

The PE polymer of the invention is a multimodal high density ethylene copolymer. By ethylene copolymer is meant a polymer the majority by weight of which derives from ethylene monomer units. The comonomer contribution in the PE polymer preferably is up to 10% by mol, more preferably up to 5 % by mol. Ideally however there are very low levels of comonomer present in the PE polymer of the invention such as 0.1 to 2 mol%, e.g. 0.1 to 1 mol%.

The other copolymerisable monomer or monomers present in the PE polymer are C3-10 alpha olefin comonomers, particularly singly or multiply ethylenically unsaturated comonomers, in particular C3-10-alpha olefins such as one or more of propene, but-1-ene, hex-1-ene, oct-1-ene, and 4-methyl-pent-1-ene. The use of 1-hexene and/or 1-butene is particularly preferred. Preferably there is only one comonomer present.

The PE polymer of the invention is a copolymer and therefore comprises ethylene and at least one comonomer as defined above. Ideally that comonomer is 1-butene.

The PE polymer of the invention is multimodal and therefore comprises at least two components. The PE polymer of the invention comprises

(A) a LMW component which is an ethylene homo-polymer component, and
(B) a HMW component which is an ethylene copolymer component.

It is generally preferred if the higher molecular weight component has a weight average molecular weight (Mw) of at least 5000 more than the lower molecular weight component, such as at least 10,000 more.

The PE polymer of the invention is multimodal. Usually, a polyethylene composition, herein the PE polymer, comprising at least two polyethylene fractions, which have been produced under different polymerisation conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of. Thus, for example, a multimodal composition consisting of two fractions is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The PE polymer of the invention has an $MFR_2$ of 0.01 to 0.5 g/10 min, preferably 0.05 to 0.5 g/lOmin, more preferably 0.1 to 0.5 g/10 min, especially 0.1 to 0.4 g/10 min, most especially 0.1 to 0.3 g/10 min.

The PE polymer of the invention preferably has an $MFR_5$ of 0.1 to 5 g/lOmin, such as 0.2 to 2 g/lOmin, preferably 0.5 to 1.5 g/10min.

The PE polymer of the invention preferably has an $MFR_{21}$ of 10 to 40 g/lOmin, such as 15 to 30 g/lOmin, preferably 20 to 30 g/10min.

The ratio $FRR_{21/2}$ of PE polymer is preferably in the range 80 to 140, such as 100 to 130.

The density of the PE polymer is 954 kg/m$^3$ or more. The density of the PE polymer is preferably 965 kg/m$^3$ or lower. The preferred density range is 954 to 962 kg/m$^3$.

It will be appreciated that the molecular weight and molecular distribution of the PE polymer of the invention is important. The PE polymer preferably has a molecular weight distribution Mw/Mn (MWD), being the ratio of the weight average molecular weight Mw and the number average molecular weight Mn, of 12 to 20, especially 14 to 20, most especially 16 to 20.

The weight average molecular weight Mw of the PE polymer preferably is at least 100,000 g/mol, more preferably at least 120,000 g/mol, and most preferably at least 130,000 g/mol. Furthermore, the Mw of the PE polymer preferably is at most 300, 000 g/mol, more preferably at most 275,000 g/mol. Ranges of interest include 130,000 to 220,000, preferably 140,000 to 180,000, g/mol.

The Mz/Mw ratio of the PE polymer is in the range of 6 to 8, preferably 6.25 to 7.5, especially 6.5 to 7.25.

The actual value of Mz of the PE polymer is preferably in the range of 600,000 to 2,000,000, such as 800,000 to 1,500,000, especially 900,000 to 1,400,000, most especially 900,000 to 1,300,000 g/mol.

As noted above, it is essential that the PE polymer meets the relationship:

$$Mz/Mw > 10.75 - [0.25 *(Mw/Mn)].$$

Thus, the value of Mz/Mw + 0.25*(Mw/Mn)-10.75 is positive, i.e. above 0, preferably 0.1 to 3, such as 0.1 to 2, ideally 0.2 to 1.

The rheological polydispersity index (PI) of the PE polymer of the invention may be 2.6 to 3.5 Pa$^{-1}$, preferably 2.75 to 3.25 Pa$^{-1}$.

These ranges define a PE polymer which possesses excellent mechanical properties. Preferably, the PE polymer of the invention has a tensile modulus of at least 1000 kPa, more preferably at least 1030 kPa, preferably at least 1040 kPa, more preferably 1050 kPa. The upper limit of said tensile modulus is typically 1200 kPa.

The PE polymer preferably has an environmental stress crack resistance measured as FNCT (6.0 MPa, 50°C) of 60 h or more, more preferably 70 h or more, more preferably of 75 h or more.

The PE polymer may possess an ESCR (bell test) of 800 hrs or more, such as 900 hrs or more, especially 1,000 hrs or more. Some grades can even have ESCR values of 1100 hrs or more.

The PE polymer may possess a die swell of less than 2.10 (at an applied shear of 72 s$^{-1}$) such as less than 2.0. The PE polymer design markedly enhances the die swell of the polymer, which is advantageous as it allows the melt to be placed into complex shaped parisons. It is particularly preferred if the die swell is less than 2.0 and the PI is more than 2.5 Pa$^{-1}$. It might be expected that high PI values would lead to higher die swells, but that is not observed with the PE polymers of the invention.

The PE polymer may possess a notched charpy impact strength (23°C) of at least 25 kJ/m$^2$, such as at least 30 kJ/m$^2$.

The molecular weight relationships defined above indicates the specific polymer broadness, i.e. implies a unique relationship between LMW and HMW portions in a MWD curve. This weighting of the molecular weight distribution occurs results in the advantageous properties which we observe in the present application.

As noted above, the PE polymer of the invention comprises a LMW component (A) and a HMW component (B). The weight ratio of LMW component (A) to HMW component (B) in the composition is preferably in the range 30:70 to 70:30, more preferably 35:65 to 65:35, most preferably 40:60 to 60:40. In some embodiments the ratio may be 45 to 55 wt% of LMW component (A) and 55 to 45 wt% HMW component (B), such as 45 to 52 wt% of LMW component (A) and 55 to 48 wt% HMW component (B).

A preferred PE polymer comprises, preferably consists of, a LMW component (A) which is an ethylene homopolymer and a HMW component (B), which is preferably an ethylene copolymer with butene as the comonomer.

The LMW component (A) of PE polymer preferably has an $MFR_2$ of 10 g/10min or higher, more preferably of 50 g/10min or higher, and most preferably 100 g/10min or higher.

Furthermore, LMW component (A) preferably, has an $MFR_2$ of 1000 g/10 min or lower, preferably 800 g/10 min or lower, and most preferably 600 g/10min or lower. Preferred ranges are 100 to 500 g/lOmin, preferably 150 to 400 g/10min.

The weight average molecular weight Mw of LMW component (A) of PE polymer preferably is 10,000 g/mol or higher, more preferably is 15,000 g/mol or higher. The Mw of fraction (A) preferably is 90,000 g/mol or lower, more preferably 80,000 g/mol or lower, and most preferably is 70,000 g/mol or lower.

Preferably, LMW component (A) has a density of at least 965 kg/m$^3$. Preferably the density of the LMW component (A) is at least 970 kg/m$^3$.

HMW component (B) of PE polymer is a copolymer of ethylene and at least one C3-10 alpha olefin comonomer, preferably with a density of less than 965 kg/m$^3$. Examples of suitable alpha-olefins include but-1-ene, hex-1-ene and oct-1-ene. But-1-ene is especially preferred as at least one of the comonomer(s) present in HMW component (B) of PE polymer. Preferably HMW component (B) of PE polymer comprises one comonomer which is but-1-ene.

Where herein features of LMW component (A) and/or HMW component (B) of PE polymer of the present invention are given, these values are generally valid for the cases in which they can be directly measured on the respective LMW component (A) or HMW component (B), e.g. when such component is separately produced or produced in the first stage of a multistage process. However, the PE polymer may also be and preferably is produced in a multistage process wherein e.g. LMW component (A) and HMW component (B) are produced in subsequent stages. In such a case, the properties of the LMW component (A) or HMW component (B) produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the LMW component (A) or HMW component (B) produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4:13.

Thus, although not directly measurable on the multistage process products, the properties of the LMW component (A) or HMW component (B) produced in higher stages of such a multistage process can be determined by applying either or both of the above methods. The skilled person will be able to select the appropriate method.

A multimodal (e.g. bimodal) PE polymer as hereinbefore described may be produced by mechanical blending of the LMW component (A) and HMW component (B) (e.g. monomodal polyethylenes) having differently centred maxima in their molecular weight distributions. The monomodal LMW component (A) and HMW component (B) required for blending may be available commercially or may be prepared using any conventional procedure known to the skilled man in the art.

Preferably, the LMW component (A) and HMW component (B) of the multimodal PE polymer may be produced by polymerisation in one reactor using conditions which create a multimodal (e.g. bimodal) polymer product, e.g. using a catalyst system or mixture with two or more different catalytic sites, each site obtained from its own catalytic site precursor, or by polymerisation using a two or more stage, i.e. multistage, polymerisation process with different process conditions in the different stages or zones (e.g. different temperatures, pressures, polymerisation media, hydrogen partial pressures, etc.) and using same or different catalyst systems, preferably the same catalyst system.

Polymer compositions produced in a multistage process are also designated as "in-situ" blends.

Most preferably LMW component (A) and HMW component (B) of the PE polymer are produced by in-situ blending in a multistage process. The process of the invention preferably involves:

polymerising ethylene so as to form a LMW component (A); and subsequently
polymerising ethylene and at least one C3-10 alpha olefin comonomer in the presence of component (A) so as to form a HMW component (B).

It is preferred if at least one of LMW component (A) and HMW component (B) is produced in a gas-phase reaction.

It is further preferred, if one of the LMW and HMW components (A) and (B) of the PE polymer, preferably LMW component (A), is produced in a slurry reaction, preferably in a loop reactor, and one of the LMW and HMW components (A) and (B), preferably HMW component (B), is produced in a gas-phase reaction.

Preferably, the multimodal (e.g. bimodal) PE polymer is produced by a multistage ethylene polymerisation, e.g.

using a series of reactors, with optional comonomer addition preferably in only the reactor(s) used for production of the HMW component (B) or differing comonomers used in each stage. A multistage process is defined generally to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

Accordingly, it is preferred that LMW and HMW components (A) and (B) of the PE polymer are produced in different stages of a multistage process.

Preferably, the multistage process comprises at least one gas phase stage in which, preferably, HMW component (B) is produced.

It is further preferred, if fraction (B) is produced in a subsequent stage in the presence of LMW component (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, as a preferred multistage process for the production of the polyethylene composition according to the invention.

Preferably, the main polymerisation stages of the multistage process for producing the PE polymer according to the invention are such as described in EP 517 868, i.e. the production of LMW and HMW components (A) and (B) is carried out as a combination of slurry polymerisation for LMW component (A)/gas-phase polymerisation for HMW component (B). The slurry polymerisation is preferably performed in a so-called loop reactor. Further preferred, the slurry polymerisation stage precedes the gas phase stage.

Optionally, the main polymerisation stages may be preceded by a prepolymerisation, in which case up to 20 % by weight, preferably 1 to 10 % by weight, more preferably 1 to 5 % by weight, of the total composition is produced. The prepolymer is preferably an ethylene homopolymer. At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end. Where prepolymerisation is used, the prepolymer formed can be regarded as forming part of the lower molecular weight fraction (A). I.e. the optional prepolymer component is counted to the amount (wt%) of LMW component (A).

Preferably, the polymerisation conditions in the preferred two-stage method are chosen so that the comparatively low-molecular weight polymer containing no comonomer is produced in one stage, preferably the first stage, owing to a high content of chain-transfer agent (hydrogen gas), whereas the high-molecular weight polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C. The temperature in the gas-phase reactor preferably is 70 to 105 °C, more preferably is 75 to 100°C, and most preferably is 82 to 97°C.

A chain-transfer agent, preferably hydrogen, is added as required to the reactors, and preferably 100 to 800 moles of $H_2$/kmoles of ethylene are added to the reactor, when the LMW fraction is produced in this reactor, and 50 to 500 moles of $H_2$/kmoles of ethylene are added to the gas phase reactor when this reactor is producing the HMW fraction.

The PE polymer of the invention is prepared using a polymerisation catalyst. The polymerisation catalyst may be a coordination catalysts of a transition metal, such as Ziegler-Natta (ZN), metallocene, non-metallocene, Cr-catalyst etc. The catalyst may be supported, e.g. with conventional supports including silica, Al-containing supports and magnesium dichloride based supports. Preferably the catalyst is a ZN catalyst, more preferably the catalyst is silica supported ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis, EP 0 688 794 and EP 0 810 235. Particularly preferred Ziegler-Natta catalysts are described in EP 0 810 235.

It is preferred that the catalyst used to form LMW component (A) is also used to form HMW component (B). It is generally transferred from the first stage to the second stage of the process of the invention.

**Activators**

As well known, the Ziegler-Natta catalyst is used together with an activator. Suitable activators are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Furthermore they include alkylaluminium oxy-compounds, such as methylaluminiumoxane (MAO), hexaisobutylaluminiumoxane (HIBAO) and tetraisobutylaluminiumoxane (TIBAO). Also other aluminium alkyl compounds, such as isoprenylaluminium, may be used. Especially preferred activators are trialkylaluminiums, of which triethylaluminium, trimethylaluminium and tri-isobutylaluminium are particularly used.

The amount of activator used depends on the specific catalyst and activator. Typically triethyl aluminium is used in such amount that the molar ratio of aluminium to the transition metal, like Al/Ti, is from 1 to 1000, preferably from 3 to 100.

The resulting end product, i.e. PE polymer, consists of an intimate mixture of the polymers (herein LMW component (A) and HMW component (B)) from the two or more reactors, the different molecular-weight-distribution curves of these polymers together forming a molecular-weight-distribution curve having a broad maximum or two or more maxima, i.e. the end product is a bimodal or multimodal polymer mixture.

The PE polymer is recovered from the polymerisation reactor including conventional post-reactor treatment and then typically extruded in a conventional extruder to form PE polymer in a pellet form. In a further aspect therefore, the invention provides a PE polymer of the invention in the form of pellets. In a further aspect the invention also provides the PE composition of the invention in the form of pellets.

The PE composition of the invention preferably comprises, more preferably consists of, the PE polymer. The PE composition may comprise optional further polymer components and optional additives. Most preferably the PE composition of the invention comprises, more preferably consists of, the PE polymer as the sole polymer component(s) and optionally, and preferably, additives.

The amount of PE polymer in the PE composition of the invention is preferably at least 50 wt%, such as at least 60 wt%, more preferably at least 70 wt%, especially at least 80 wt%. In some embodiments, the wt% of the PE polymer in the PE composition of the invention is 90 wt% or more, such as 95 wt% or more.

The optional further polymer components and optional additives can be added to the PE polymer at the pellet extrusion step during the polymerisation process or compounded with the PE pellets to form the PE composition.

It is to be understood that optional additive(s) may be added to the PE polymer composition in form of a masterbatch, i.e. together with a carrier polymer. In such case the carrier polymer is not considered as a polymer component(s) of the PE composition, but is calculated to the amount (wt%) of the additive based on the total amount of the PE composition (100 wt%).

Preferably, the PE composition comprises the PE polymer as the sole polymer component. More preferably, the PE composition consists of the PE polymer and optional, (and preferable), additives. The PE composition thus preferably contains minor quantities of conventionally used additives such as antioxidants, UV stabilisers, acid scavengers, pigments, nucleating agents, antistatic agents, fillers, etc., generally in amounts of up to 10 % by weight, preferably up to 5 % by weight.

The PE composition of the invention can then be converted into articles as described above and below. As mentioned above, the PE composition of the invention may be combined during the article forming process with other polymer components which are different from the PE polymer of the invention, before conversion into a desired article. However articles of the invention, such as pipes or moulded articles, preferably blow moulded articles, such as containers, like bottles, preferably comprise at least 90 wt% of the PE composition of the invention, such as at least 95 wt%. Articles of the invention, such as pipes or moulded articles, preferably blow moulded articles, such as containers, like bottles, preferably comprise at least 90 wt% of the PE polymer of the invention, such as at least 95 wt%.

In one embodiment, the articles consist essentially of the PE composition of the invention and optional further additives added during the conversion process to an article. As mentioned above, the term "consists of" means that the PE polymer of the PE composition of the invention is the only polymer component, as defined above, present in the article. It will be appreciated however that such a polymer may contain standard polymer additives some of which might be in form of a well-known masterbatch which comprises the additive together with a carrier polymer. Such carrier polymer is not considered as the "further polymer component" present in the article, but is calculated to the total amount (wt%) of the additives present in the article.

**Applications**

Still further, the present invention relates to an article such as a pipe or a moulded article, preferably a blow moulded article, comprising a PE composition as described above and to the use of such a PE composition for the production of an article, preferably pipe or moulded article.

Where the polymer of the invention is used to form a pipe, such pipes will typically be thin walled pipes, which thin walled pipes have a well-known meaning.

A preferred article is however, a moulded article, preferably blow moulded article, preferably blow moulded container for liquids, such as bottles. Preferred blow moulded articles are bottles optionally provided with a handle. Such bottles may have volumes e.g. of 200 ml to 10 L or more.

Blow moulding of the composition hereinbefore described may be carried out using any conventional blow moulding equipment.

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following non limiting examples and figures.

Figure 1 shows the relationship between Mz/Mw and Mw/Mn for the PE polymer of the invention and a selection of commercial HDPE polymers.

Figure 2 shows the relationship between ESCR and tensile modulus for the PE polymer of the invention and a selection of commercial HDPE polymers.

Figure 3 shows the relationship between PI and die swell for PE polymer of the invention and a selection of commercial HDPE polymers.

Figure 4 shows the relationship between charpy impact strength and tensile modulus for the PE polymer of the invention and a selection of commercial HDPE polymers.

Figure 5 shows the relationship between charpy notched impact strength (23°C) vs. Bell ESCR for the PE polymer of the invention and a selection of commercial HDPE polymers.

**Analytical tests: Test Methods:**

Melt Flow Rate

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of rheological broadness and denotes the ratio of flow rates at different loads. Thus, $FRR_{21/2}$ denotes the value of $MFR_{21}/MFR_2$.

Density

Density of the polymer was measured according to ISO 1183 / 1872-2B.

For the purpose of this invention the density of the blend can be calculated from the densities of the components according to:

$$\rho_b = \sum_i w_i \cdot \rho_i$$

where $\rho_b$ is the density of the blend,
$w_i$ is the weight fraction of component "i" in the blend and
$\rho_i$ is the density of the component "i".

Molecular weight

Molecular weight averages, molecular weight distribution (Mn, Mw, Mz MWD)

Molecular weight averages (Mz, Mw and Mn), Molecular weight distribution (MWD) and its broadness, described by MWD= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x M_i)}{\sum_{i=1}^{N} A_i} \quad (2)$$

$$M_z = \frac{\sum_{i=1}^{N}(A_i x M_i^2)}{\sum_{i=1}^{N}(A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g}, \alpha_{PS} = 0.655$$

$$K_{PE} = 39 \text{ x } 10^{-3} \text{ mL/g}, \alpha_{PE} = 0.725$$

$$K_{PP} = 19 \text{ x } 10^{-3} \text{ mL/g}, \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

Tensile properties

Tensile properties were measured on injection moulded samples according to ISO 527-2, Specimen type Multipurpose bar 1A, 4 mm thick. Tensile modulus was measured at a speed of 1 mm/min. Sample preparation was done acc ISO 1872-2

Environmental Stress Crack Resistance (FNCT)

Environmental Stress Crack Resistance (ESCR) may be measured according to the full notch creep test method (FNCT) according to ISO/DIS 16770 at 50°C with a notch depth of 1 mm and specimen dimensions 6 mm x 6 mm x 90 mm. The solvent used was 2 wt% Arcopal N110 in deionized water. Compression moulded samples were employed (ISO 1872-2), cooling rate at compression moulding: 15 K/min. Time to failure ($t_f$) was measured at 4 different stress levels ($\sigma$) between 5-7 MPa. A plot of log($t_f$) vs. log($\sigma$) was fitted with a straight line and a equation of the form *log($t_f$) = A log($\sigma$)+B*. FNCT value at 6 MPa stress is then calculated based on linear interpolation using the equation.

Swell ratio (Die Swell)

The die swell was determined using a Triple Bore Capillary Rheometer, Rheograph 6000 (Göttfert GmbH, Germany), coupled with a high resolution laser detection device. The diameter detector was a Zumbach Odac 30J (emitter/receiver system), Laser type: laser diode VLD 0.9 mW and Laser class 2, wavelength: 630-680 nm, P: <1mW

The following test conditions were employed:

The experiments were performed at 210°C +/- 1°C. The sample was preheated for 10 mins.

Test piston: 11.99 mm (diameter)
Test barrel: 12 mm (diameter)
Round hole die length/diameter/run in angle: 30mm/2mm/180°
Pressure transducer: 500bar +/-2.5
Distance die exit / laser beam: 20mm +/-1
Distance die exit / pneumatic cut device: 65mm +/-1
Apparent shear rates 72 s$^{-1}$

Conditions for measure point take over at the viscosity measurement and swell determination:

Pressure stability: comparison time: 7s; take over tolerance: 5%
Number of measurements for each apparent shear rate: 2

Test Procedure:

Before start of the measurement cut the extrudate with the pneumatic cut device (extrudate length 65mm). First step is a viscosity measurement beginning with the lowest apparent shear rate. After the take over of the measure point, immediately the swelling determination begins with the same apparent shear rate as was used for the viscosity measurement. At this point, the piston stops. All steps are repeated for each apparent shear rate.

Evaluation:

The reported Swell ratio (Dynamic die swell) is the average of two measurements at test temperature.

The swell ratio is determined as the ratio between the strand diameter and the die diameter, as follows:

$$dds = \frac{dstrand^2}{ddie^2}$$

The method complies with ASTM D 3835 - 02 "Standard Test Method for Determination of Properties of Polymeric Materials by Means of a Capillary Rheometer"

**Environmental Stress Crack Resistance**

Environmental Stress Crack Resistance (ESCR) was measured using the Bell Test according to ASTM 1693, condition B at 50°C. For the Bell test, the average of two F50 values is given in the table. Each F50 was calculated from 10 specimens. For the samples which didn't break after 2000 hours, the test was interrupted.

**Rheological polydispersity index**

Rheological polydispersity index (rheological PI) was calculated as $10^5/G_c$ where $G_c$ stands for the cross-over modulus.

**Crossover Modulus $G_c$**

The cross-over modulus is related to the rheological polydispersity index by the equation:

$$PI = 10^5/G_c$$

The cross over modulus $G_c$ is the value of G' (storage modulus) and G" (loss modulus) at the frequency where the two moduli are equal. That is where the curves of G'($\omega$) and G"($\omega$) cross. Fitting the points on both curves in the vicinity of the cross over point with cubic splines permits an objective identification of the cross over modulus.

**Notched Charpy impact strength**

The notched Charpy impact strength measurement was carried out according to ISO 179/1 eA at 23°C by using injection moulded test specimen (80 x 10 x 4 mm), moulded as described in EN ISO 1873-2.

**Examples**

**Polymerisation**

A loop reactor having a volume of 500 dm$^3$ was operated at 95 °C and 60 bar pressure for producing the lower molecular weight polymer component (A). Into the reactor were introduced 110 kg/h of propane diluent, ethylene and hydrogen together with the Lynx 200 (TM) catalyst as manufactured and supplied by BASF (SE) and TEAL (triethylaluminium) as the cocatalyst.

The polymer slurry was withdrawn from the second loop reactor and transferred into a flash vessel operated at 3 bar pressure and 70°C temperature where the hydrocarbons were substantially removed from the polymer. The polymer was then introduced into a gas phase reactor operated at a temperature of 85°C and a pressure of 20 bar. In addition ethylene, 1-butene, nitrogen as inert gas and hydrogen were introduced into the reactor. The polymerisation feeds and conditions are shown in Table 1. The resulting polymer was purged with nitrogen (about 50 kg/h) for one hour, stabilised with conventional UV stabilisers and Ca-stearate and then extruded to pellets in a counter-rotating twin screw extruder CIM90P (manufactured by Japan Steel Works) so that the throughput was 221 kg/h and the screw speed was 349 rpm. The temperature profile is in each zone was 90/120/190/250 °C.

Table 1 Polymerisation feeds and conditions

| | Ex 1 | Ex 2 |
|---|---|---|
| **Reactor 1** - **Loop** | | |
| Temperature (°C) | 95 | 95 |
| Pressure (kPa) | 60 | 60 |
| Cat feed (g/h) | 0.9 | 1.0 |
| C2 feed (kg/h) | 39 | 39 |
| Cocatalyst feed (g/h) | 2.4 | 2.3 |
| H2/C2 ratio (mol/kmol) | 658 | 669 |
| C4/C2 ratio (mol/kmol) | 0 | 0 |
| Al/Ti ratio (mol/mol) | 17 | 14 |
| Production rate (kg/h) | 36 | 36 |
| split % | 52 | 51 |
| **Reactor 2 - Gas Phase** | | |
| Temperature (°C) | 85 | 85 |
| Pressure (kPa) | 20 | 20 |
| C2 feed (kg/h) | 55 | 55 |
| H2/C2 ratio (mol/kmol) | 127 | 128 |
| C4/C2 ratio (mol/kmol) | 11 | 10 |
| Production rate (kg/h) | 34 | 34 |
| Split % | 48 | 49 |
| Final MFR$_2$ (g/10 min) | 0.21 | 0.2 |
| Final density (kg/m$^3$) | 957 | 957.4 |

Results are presented in table 2.

Table 2

|  |  | Density | MFR2 | MFR$_5$ | MFR$_{21}$ | FRR21/2 | PI | Mw/Mn | Mz/Mw |
|---|---|---|---|---|---|---|---|---|---|
|  |  | kg/m3 | g/10 min | g/10 min | g/10 min |  | Pa(-1) |  |  |
|  |  |  |  |  |  |  |  |  |  |
| Inventive examples | 1 | 957 | 0.21 | 0.91 | 24.3 | 115.7 | 2.92 | 18.4 | 6.5 |
|  | 2 | 957.4 | 0.2 | 0.9 | 23.7 | 118.5 | 2.95 | 19.0 | 7.1 |
|  |  |  |  |  |  |  |  |  |  |
| Comp examples | Ref 1 | 955.7 | 0.39 | 1.3 | 22.3 | 57.2 | 1.5 | 12.7 | 4.7 |
|  | Ref 2 | 957.1 | 0.32 | 1.26 | 29.3 | 91.6 | 2.44 | 14.5 | 6.8 |
|  | Ref 3 | 954 | 0.42 | 1.93 | 40.9 | 97.4 | 2.47 | 13.4 | 6.1 |
|  | Ref 4 | 951.5 | 0.46 | 1.94 | 40.3 | 87.6 | 2.13 | 13.0 | 5.7 |
|  | Ref 5 | 952.6 | 0.33 | 1.53 | 30.5 | 92.4 | 2.13 | 7.6 | 7.9 |
|  | Ref 6 | 950.5 | 0.37 | 1.59 | 29.9 | 80.8 | 2.1 | 9.7 | 6.2 |

Refs 1 to 4 are commercial bimodal Ziegler Natta PEs
Refs 5 and 6 are commercial unimodal Cr PE

Table 3

|  |  | Tensile modulus | ESCR Bell test | FNCT (6.0 MPa, 50 C) | Die swell at 72 s(-1) | CIS (23°C) | Mz/Mw +0.25* (Mw/Mn) - **10.75** |
|---|---|---|---|---|---|---|---|
|  |  | MPa | hours |  |  | kJ/m2 |  |
|  |  |  |  |  |  |  |  |
| Inventive examples | 1 |  | >1164 | 92 | 1.89 | 39 | 0.40 |
|  | 2 | 1063 | >1164 | 80 | 1.91 |  | 1.06 |
|  |  |  |  |  |  |  |  |
| Comp examples | Ref 1 | 1010 | 468 | 50 | 1.86 | 50 | -2.91 |
|  | Ref 2 | 1090 | 108 | 30 | 1.90 | 41 | -0.31 |
|  | Ref 3 | 964 | 516 | 60 | 1.82 | 27.1 | -1.35 |
|  | Ref 4 | 899 | 612 | 76 | 1.85 | 30.1 | -1.79 |
|  | Ref 5 | 950 | 24 | 20 | 2.42 | 59.2 | -0.94 |
|  | Ref 6 | 931 | 72 | 20 | 2.19 | 53.8 | -2.17 |

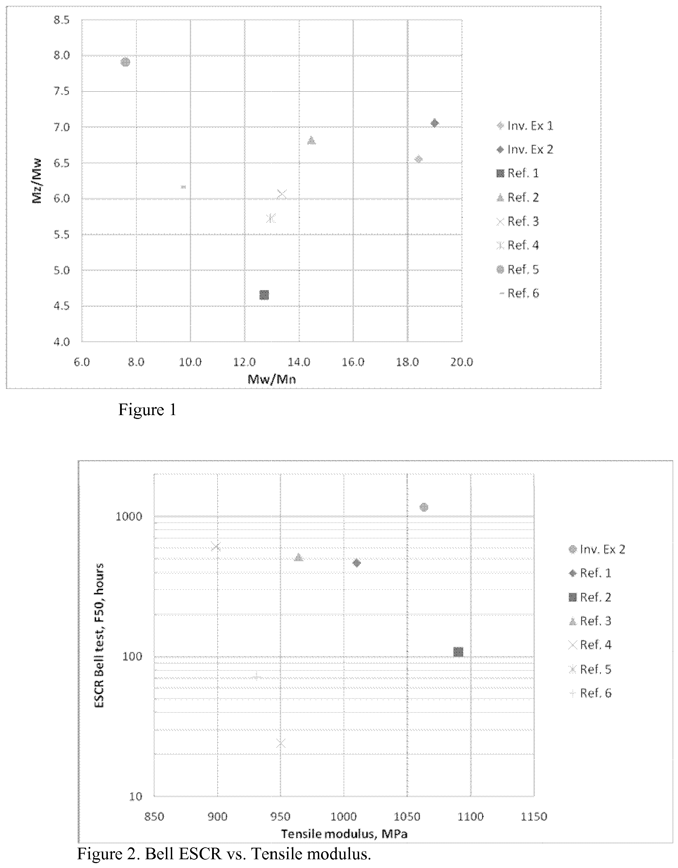

The inventive examples have a balance between mechanical properties and processability which is highly desirable for moulded articles and pipes, preferably for moulded articles as described above or below or in claims. The excellent property balance is due to the Mz/Mw and Mw/Mn relationship of the PE polymer of the invention. I.e. the mechanical properties and processability properties of the inventive examples are clearly constantly better over the references as shown in the above tables and figures 1-5 below. We can conclude that the inventive examples exhibit a unique relationship between the molecular weight distribution parameters (satisfying the following relationship **Mz/Mw > 10.75** - **0.25**\*(**Mw/Mn**)) which allows them to achieve such excellent combination of mechanical properties and processability.

None of the comparative examples can achieve the above mentioned combination of mechanical properties. For example from Figure 2 below one can see that both Cr polymers have poor stress cracking performance combined with low stiffness. The other comparative examples have approximately the same stiffness-stress cracking balance but the inventive examples still outperform them, therefore providing the best stiffness-ESCR balance among all polymers.

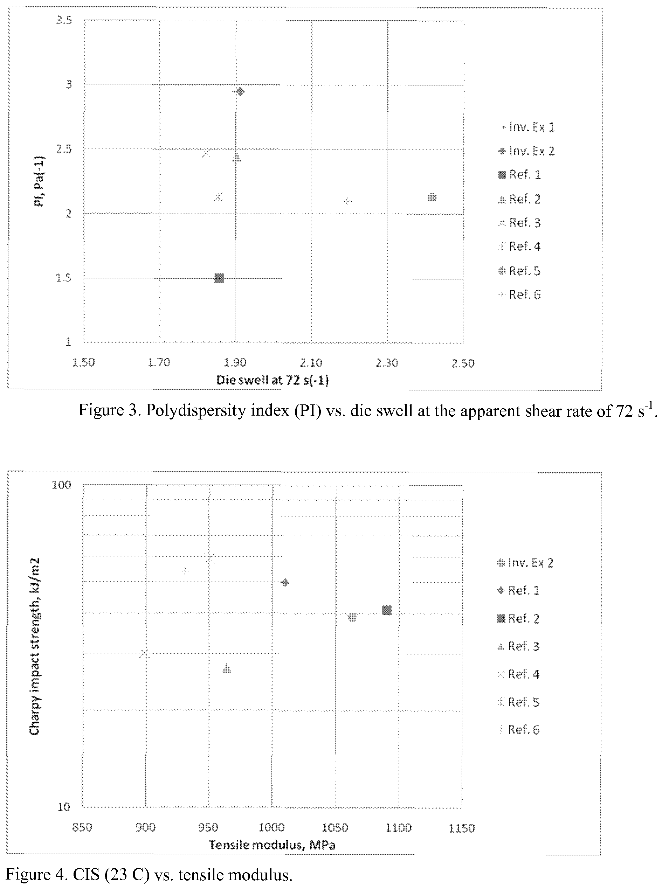

Figure 3 depicts the values of polydispersity index (PI) and die swell. The former can be used to judge the ease of polymer extrusion. Higher values (=higher rheological broadness) mean that there is more shear thinning, e.g. lower viscosity under high shear rate, relevant for polymer extrusion. In practice this means that the polymers with higher polydispersity index can be processed at lower temperatures and/or lower melt pressure. When it comes to die swell we can see that there is a significant difference between HDPE produced with Cr-based catalyst (Rfs 5, 6) and multimodal ZN-based HDPE.

Figure 4 demonstrates the deficiencies of Refs 3 and 4 in terms of stiffness-impact balance. We can see that they show an inferior balance between impact toughness and stiffness.

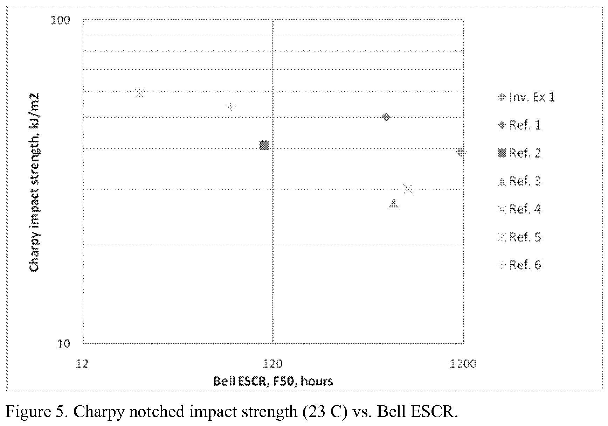

ESCR and charpy impact imply the properties relevant for the integrity of the final moulded article. Figure 5 shows that the one of these properties are good in commercial references while the other is sacrificed, whereas both properties are excellent in the inventive sample, and even improved over the references.

To conclude, we can see that none of the comparative examples offer a good combination of mechanical properties and processability required for a blow moulding HDPE grade. The Cr refs 5 and 6 have poor ESCR-stiffness balance while Ziegler Natta refs 3 and 4 have low impact resistance at the same stiffness. Ref 2 and especially Ref 1 have lower rheological broadness compared to the inventive examples meaning more difficult processing.

**Blow Moulding Process**

The target of this development is to create a blow moulding grade fulfilling the requirements for modern blow moulding machines. Important properties are both processing and properties of the end product.

Reference examples and inventive examples were tested on exactly the same equipment, but processing conditions had to be adjusted (optimized) depending on the material employed. With the adjustments, the clear benefits for using lower melt temperatures etc. of the inventive examples could be seen.

The target was the production of bottles up to 10 L for household and industrial chemicals such as cosmetics, detergents, industrial cleaners but also milk and food products. Important properties for bottles are visual aspect as there is surface finish but also top load, drop/impact performance and potential for lighter bottles.

Important properties for processing on the blow moulding machine are melt strength, extrusion stability and potential for extrusion at very narrow die gap at low temperatures.

The polymers of examples 1 and 2 were subjected to blow moulding testing. These trials demonstrated:

- Melt temperature can be reduced by approx 30°C compared to production with Cr catalyst based grades. Lower melt temperature gives potential for cooling/cycle time reduction and energy savings.
- Very good melt strength: no sagging could be observed even for wide, thin large parisons. No decrease in parison size from bottom to top.
- Good melt strength also resulted in good quality welds at bottom, handles and top.
- Bottle surface is matt/silky, as the blow moulding market requires.
- Even wide, thin walled parisons could be successfully extruded at elevated extrusion speed. This is required for production of high cycle, thin walled products.
- ESCR tests and drop tests on bottles demonstrated excellent performance.

**Claims**

1. A multimodal polyethylene polymer having an MFR$_2$ of 0.01 to 0.5 g/lOmin, a density of 954 kg/m$^3$ or more, a Mw/Mn of 12-22, an Mz/Mw of 6 to 8 and wherein

$$Mz/Mw > 10.75 - [0.25 *(Mw/Mn)];$$

said polymer comprising:

(A) a lower molecular weight ethylene homopolymer (referred herein as LMW component (A)); and
(B) a higher molecular weight polymer component of ethylene and at least one C3-10 alpha olefin comonomer, (referred herein as HMW component (B).

2. A polymer as claimed in claim 1 wherein said polymer has an Mw/Mn of 12-20, preferably 14-20, especially 16 to 20.

3. A polymer as claimed in claim 1 or 2 wherein both LMW component (A) and HMW component (B) are obtainable by polymerising said LMW component (A) and HMW component (B) in the presence of a Ziegler Natta catalyst, preferably the same Ziegler Natta catalyst.

4. A polymer as claimed in any preceding claim having an $MFR_2$ of 0.05 to 0.5 g/lOmin, more preferably 0.1 to 0.5 g/lOmin, especially 0.1 to 0.4 g/lOmin, most especially 0.1 to 0.3 g/10 min.

5. A polymer as claimed in any preceding claim, wherein said polymer has one or more of the following properties, preferably at least two of the following properties, more preferably three or more, most preferably all of the following properties:

   (a) a PI of 2.6 to 3.5 $Pa^{-1}$, preferably 2.75 to 3.25 $Pa^{-1}$;
   (b) a tensile modulus of at least 1000 kPa, more preferably at least 1030 kPa, preferably at least 1040 kPa, more preferably 1050 kPa;
   (c) an environmental stress crack resistance measured as FNCT (6.0 MPa, 50°C) of 60 h or more, more preferably 70 h or more, more preferably of 75 h or more;
   (d) die swell of less than 2.10 (at an applied shear of 72 $s^{-1}$), preferably less than 2.0 $s^{-1}$;
   (e) a notched charpy impact strength (23°C) of at least 25 $kJ/m^2$, such as at least 30 $kJ/m^2$.

6. A polymer as claimed in any preceding claim wherein said polymer has a density of 954 to 962 $kg/m^3$.

7. A polymer as claimed in any preceding claim wherein HMW component (B) is an ethylene butene copolymer.

8. A polymer as claimed in any preceding claim wherein said polymer has a ESCR (Bell test) of at least 800, preferably 900, more preferably 1000 hrs.

9. A polymer as claimed in any preceding claim, wherein said polymer has one or two of the below properties, preferably both the below properties:

   (a) Mz/Mw + 0.25*(Mw/Mn)-10.75 for said polymer is 0.1 to 3, such as 0.1 to 2, ideally 0.2 to 1;
   (b) an Mz/Mw is 6.25 to 7.5;

   preferably said polymer has both properties.

10. A polyethylene composition as claimed in any preceding claim consisting of said multimodal polyethylene polymer; or a polyethylene composition comprising a multimodal polyethylene polymer as claimed in any preceding claim, optional further polymer components and optional additive(s), most preferably consisting of said multimodal polyethylene polymer and additive(s).

11. An article, such as a pipe or moulded article, comprising a polymer as claimed in any of claims 1 to 9, preferably a blow moulded article.

12. An article as claimed in claim 11 consisting of said multimodal polyethylene polymer; or an article as claimed in claim 11 comprising said multimodal polyethylene polymer, optional further polymer(s) and optional additive(s), most preferably consisting of said multimodal polyethylene polymer and additive(s).

13. Use of the polymer as claimed in any one of claims 1 to 9 in the manufacture of an article such as a moulded article or pipe, preferably blow moulded article.

14. A process for the preparation of a multimodal polyethylene polymer as claimed in any of claims 1 to 9 comprising; polymerising ethylene so as to form a LMW component (A); and subsequently polymerising ethylene and at least one C3-10 alpha olefin comonomer in the presence of component (A) so as to form a HMW component (B) so as to obtain a multimodal polyethylene polymer having an $MFR_2$ of 0.01 to 0.5 g/lOmin, a density of 954 $kg/m^3$ or more, a Mw/Mn of 12-22, an Mz/Mw of 6 to 8 and wherein

$$Mz/Mw > 10.75 - [0.25 *(Mw/Mn)].$$

recovering the obtained polymer; and optionally
pelletizing the polymer in an extruder to form a composition in pellet form.

15. A process as claimed in claim 14 further comprising moulding the polyethylene in pellet form to form an article, preferably a blow moulded article, or extruding the polymer in pellet form to form a pipe, preferably in pellet form to form an article, preferably a blow moulded article.

**Patentansprüche**

1. Multimodales Polyethylenpolymer, das einen $MFR_2$ von 0,01 bis 0,5 g/10 min, eine Dichte von 954 kg/m$^3$ oder mehr, ein Mw/Mn von 12-22, ein Mz/Mw von 6 bis 8 aufweist und wobei

$$Mz/Mw > 10,75 - [0,25 *(Mw/Mn)];$$

wobei das Polymer das Folgende umfasst:

(A) ein Ethylenhomopolymer mit niedrigerem Molekulargewicht (nachstehend als LMW-Komponente (A) bezeichnet); und
(B) eine Polymerkomponente aus Ethylen und mindestens einem C3-10 alpha-Olefincomonomer mit höherem Molekulargewicht (nachstehend als HMW-Komponente (B) bezeichnet).

2. Polymer nach Anspruch 1, wobei das Polymer ein Mw/Mn von 12-20, vorzugsweise 14-20, insbesondere 16 bis 20 aufweist.

3. Polymer nach Anspruch 1 oder 2, wobei sowohl die LMW-Komponente (A) als auch die HMW-Komponente (B) durch Polymerisieren von der LMW-Komponente (A) und der HMW-Komponente (B) in Gegenwart von einem Ziegler-Natta-Katalysator, vorzugsweise dem gleichen Ziegler-Natta-Katalysator, erhältlich ist.

4. Polymer nach einem der vorhergehenden Ansprüche, das einen $MFR_2$ von 0,05 bis 0,5 g/10 min, vorzugsweise 0,1 bis 0,5 g/10 min, insbesondere 0,1 bis 0,4 g/10 min, am meisten bevorzugt 0,1 bis 0,3 g/10 min aufweist.

5. Polymer nach einem der vorhergehenden Ansprüche, wobei das Polymer eine oder mehrere der folgenden Eigenschaften, vorzugsweise mindestens zwei der folgenden Eigenschaften, besonders vorzugsweise drei oder mehr, am meisten bevorzugt alle der folgenden Eigenschaften aufweist:

(a) einen PI von 2,6 bis 3,5 Pa$^{-1}$, vorzugsweise 2,75 bis 3,25 Pa$^{-1}$,
(b) einen Zugmodul von mindestens 1000 kPa, besonders vorzugsweise mindestens 1030 kPa, vorzugsweise mindestens 1040 kPa, besonders vorzugsweise 1050 kPa;
(c) eine Spannungsrissbeständigkeit, gemessen als FNCT (6,0 MPa, 50 °C), von 60 h oder mehr, besonders vorzugsweise 70 h oder mehr, besonders vorzugsweise von 75 h oder mehr;
(d) eine Spritzquellung von weniger als 2,10 (bei einer angelegten Scherung von 72 s$^{-1}$), vorzugsweise weniger als 2,0 s$^{-1}$;
(e) eine Charpy-Kerbschlagzähigkeit (23 °C) von mindestens 25 kJ/m$^2$, wie zum Beispiel mindestens 30 kJ/m$^2$.

6. Polymer nach einem der vorhergehenden Ansprüche, wobei das Polymer eine Dichte von 954 bis 962 kg/m$^3$ aufweist.

7. Polymer nach einem der vorhergehenden Ansprüche, wobei die HMW-Komponente (B) ein Ethylen-Buten-Copolymer ist.

8. Polymer nach einem der vorhergehenden Ansprüche, wobei das Polymer eine ESCR (Bell-Test) von mindestens 800, vorzugsweise 900, besonders vorzugsweise 1000 h aufweist.

9. Polymer nach einem der vorhergehenden Ansprüche, wobei das Polymer eine oder zwei der folgenden Eigenschaften, vorzugsweise beide der folgenden Eigenschaften aufweist:

(a) Mz/Mw + 0,25*(Mw/Mn) - 17,75 beträgt für das Polymer 0,1 bis 3, wie zum Beispiel 0,1 bis 2, idealerweise 0,2 bis 1;
(b) ein Mz/Mw 6,25 bis 7,5 ist;

wobei das Polymer vorzugsweise beide Eigenschaften aufweist.

10. Polyethylenzusammensetzung nach einem der vorhergehenden Ansprüche, bestehend aus dem multimodalen Polyethylenpolymer; oder Polyethylenzusammensetzung, umfassend ein multimodales Polyethylenpolymer nach einem der vorhergehenden Ansprüche, optionale weitere Polymerkomponenten und optionalen Zusatzstoff(e), besonders vorzugsweise bestehend aus dem multimodalen Polyethylepolymer und Zusatzstoff(en).

11. Artikel, wie zum Beispiel ein Rohr oder geformter Artikel, umfassend ein Polymer nach einem der Ansprüche 1 bis 9, vorzugsweise ein blasgeformter Artikel.

12. Artikel nach Anspruch 11, bestehend aus dem multimodalen Polyethylenpolymer; oder
Artikel nach Anspruch 11, umfassend das multimodale Polyethylenpolymer, optionales weiteres Polymer(e) und optionalen Zusatzstoff(e), besonders vorzugsweise bestehend aus dem multimodalen Polyethylenpolymer und Zusatzstoff(en).

13. Verwendung von dem Polymer nach einem der Ansprüche 1 bis 9 bei der Herstellung von einem Artikel, wie zum Beispiel einem geformten Artikel oder Rohr, vorzugsweise einem blasgeformten Artikel.

14. Verfahren für die Herstellung von einem multimodalen Polyethylenpolymer nach einem der Ansprüche 1 bis 9, umfassend;
Polymerisieren von Ethylen, um so eine LMW-Komponente (A) zu bilden; und anschließend
Polymerisieren von Ethylen und mindestens einem C3-10 alpha-Olefincomonomer in Gegenwart der Komponente (A), um so eine HMW-Komponente (B) zu bilden, um so ein multimodales Polyethylenpolymer zu erhalten, das einen $MFR_2$ von 0,01 bis 0,5 g/10 min, eine Dichte von 954 kg/m$^3$ oder mehr, ein Mw/Mn von 12-22, ein Mz/Mw von 6 bis 8 aufweist und wobei

$$Mz/Mw > 10,75 - [0,25 *(Mw/Mn)],$$

Gewinnen von dem erhaltenen Polymer; und optional
Pelletieren von dem Polymer in einem Extruder, um eine Zusammensetzungen Pelletform zu bilden.

15. Verfahren nach Anspruch 14, ferner umfassend das Formen des Polyethylens in Pelletform, um einen Artikel, vorzugsweise einen blasgeformten Artikel, zu bilden, oder Extrudieren des Polyethylens in Pelletform, um ein Rohr zu bilden, vorzugsweise in Pelletform, um einen Artikel, vorzugsweise einen blasgeformten Artikel, zu bilden.

**Revendications**

1. Polymère de polyéthylène multimodal présentant un $MFR_2$ de 0,01 à 0,5 g/10 min, une masse volumique de 954 kg/m$^3$ ou plus, un Mw/Mn de 12 à 22, un Mz/Mw de 6 à 8 et dans lequel

$$Mz/Mw > 10,75 - [0,25 *(Mw/Mn)] ;$$

ledit polymère comprenant :

(A) un homopolymère d'éthylène de poids moléculaire bas (désigné dans le présent document par composant LMW (A)) ; et
(B) un composant polymère de poids moléculaire élevé d'éthylène et d'au moins un comonomère d'alpha-oléfine en C3 à C10, (désigné dans le présent document par composant HMW (B)) ;

**2.** Polymère selon la revendication 1 dans lequel ledit polymère présente un Mw/Mn de 12 à 20, de préférence de 14 à 20, en particulier de 16 à 20.

**3.** Polymère selon la revendication 1 ou 2 dans lequel à la fois le composant LMW (A) et le composant HMW (B) peuvent être obtenus par la polymérisation dudit composant LMW (A) et dudit composant HMW (B) en présence d'un catalyseur de Ziegler Natta, de préférence le même catalyseur de Ziegler Natta.

**4.** Polymère selon l'une quelconque des revendications précédentes présentant un MFR$_2$ de 0,05 à 0,5 g/10 min, plus de préférence de 0,1 à 0,5 g/10 min, en particulier de 0,1 à 0,4 g/10 min, plus particulièrement de 0,1 à 0,3 g/10 min.

**5.** Polymère selon l'une quelconque des revendications précédentes, dans lequel ledit polymère possède une ou plusieurs des propriétés suivantes, de préférence au moins deux des propriétés suivantes, plus de préférence trois ou plus, le plus de préférence la totalité des propriétés suivantes :

(a) un PI de 2,6 à 3,5 Pa$^{-1}$, de préférence de 2,75 à 3,25 Pa$^{-1}$ ;
(b) un module de traction d'au moins 1000 kPa, plus de préférence d'au moins 1030 kPa, de préférence d'au moins 1040 kPa, plus de préférence de 1050 kPa ;
(c) une résistance aux craquelures sous l'effet de contraintes environnementales mesurée par FNCT (6,0 MPa, 50 °C) de 60 h ou plus, plus de préférence de 70 h ou plus, plus de préférence de 75 h ou plus ;
(d) un gonflement à la matrice de moins de 2,10 (à un cisaillement appliqué de 72 s$^{-1}$), de préférence de moins de 2,0 s$^{-1}$ ;
(e) une résistance au choc sur éprouvette entaillée selon Charpy (23 °C) d'au moins 25 kJ/m$^2$, telle qu'au moins 30 kJ/m$^2$.

**6.** Polymère selon l'une quelconque des revendications précédentes dans lequel ledit polymère présente une masse volumique de 954 à 962 kg/m$^3$.

**7.** Polymère selon l'une quelconque des revendications précédentes dans lequel le composant HMW (B) est un copolymère d'éthylène butène.

**8.** Polymère selon l'une quelconque des revendications précédentes dans lequel ledit polymère présente un ESCR (test de Bell) d'au moins 800, de préférence de 900, plus de préférence de 1000 h.

**9.** Polymère selon l'une quelconque des revendications précédentes, dans lequel ledit polymère présente une ou deux des propriétés ci-dessous, de préférence les deux propriétés ci-dessous :

(a) Mz/Mw + 0,25*(Mw/Mn)-10,75 pour ledit polymère est de 0,1 à 3, tel que 0,1 à 2, idéalement de 0,2 à 1 ;
(b) Mz/Mw est de 6,25 à 7,5 ;

de préférence ledit polymère possède les deux propriétés.

**10.** Composition de polyéthylène selon l'une quelconque des revendications précédentes constituée dudit polymère de polyéthylène multimodal ; ou
composition de polyéthylène comprenant un polymère de polyéthylène multimodal selon l'une quelconque des revendications précédentes, d'autres composants polymères facultatifs et un ou plusieurs additifs facultatifs, le plus de préférence constituée dudit polymère de polyéthylène multimodal et d'un ou de plusieurs additifs.

**11.** Article, tel qu'un tuyau ou un article moulé, comprenant un polymère selon l'une quelconque des revendications 1 à 9, de préférence un article moulé par soufflage.

**12.** Article selon la revendication 11 constitué dudit polymère de polyéthylène multimodal ; ou
article selon la revendication 11 comprenant ledit polymère de polyéthylène multimodal, un ou plusieurs autres polymères facultatifs et un ou plusieurs additifs facultatifs, le plus de préférence constitué dudit polymère de polyéthylène multimodal et d'un ou de plusieurs additifs.

**13.** Utilisation du polymère selon l'une quelconque des revendications 1 à 9 dans la fabrication d'un article tel qu'un article moulé ou un tuyau, de préférence un article moulé par soufflage.

14. Procédé de préparation d'un polymère de polyéthylène multimodal selon l'une quelconque des revendications 1 à 9 comprenant ;

la polymérisation d'éthylène afin de former un composant LMW (A) ; et ensuite

la polymérisation d'éthylène et d'au moins un comonomère d'alpha-oléfine en C3 à C10 en présence du composant (A) afin de former un composant HMW (B) afin d'obtenir un polymère de polyéthylène multimodal présentant un $MFR_2$ de 0,01 à 0,5 g/10 min, une masse volumique de 954 kg/m$^3$ ou plus, un Mw/Mn de 12 à 22, un Mz/Mw de 6 à 8 et dans lequel

$$Mz/Mw > 10{,}75 - [0{,}25 *(Mw/Mn)],$$

la récupération du polymère obtenu, et facultativement

le pastillage du polymère dans une machine d'extrusion pour former une composition sous forme de pastille.

15. Procédé selon la revendication 14 comprenant en outre le moulage du polyéthylène sous forme de pastille pour former un article, de préférence un article moulé par soufflage, ou l'extrusion du polymère sous forme de pastille pour former un tuyau, de préférence sous forme de pastille pour former un article, de préférence un article moulé par soufflage.

Figure 1

Figure 2. Bell ESCR vs. Tensile modulus.

Figure 3. Polydispersity index (PI) vs. die swell at the apparent shear rate of 72 s$^{-1}$.

Figure 4. CIS (23 C) vs. tensile modulus.

Figure 5. Charpy notched impact strength (23 C) vs. Bell ESCR.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007024746 A
- WO 2011057924 A
- WO 2009085922 A
- WO 9744371 A
- WO 9618662 A
- EP 517868 A
- WO 2004055068 A
- WO 2004055069 A
- EP 0688794 A
- EP 0810235 A

**Non-patent literature cited in the description**

- **B. HAGSTROM.** Extended Abstracts and Final Programme. *Conference on Polymer Processing (The Polymer Processing Society),* 19 August 1997, vol. 4, 13